# EUROPÄISCHE PATENTSCHRIFT

(11) **EP 0 598 249 B1**
(45) Veröffentlichungstag und Bekanntmachung des Hinweises auf die Patenterteilung: **18.09.1996**
(21) Anmeldenummer: 93117221.7
(22) Anmeldetag: 23.10.1993
(51) Int. Cl.: B01J 49/00, B01J 47/08

(54) **Verfahren und Vorrichtung zum Entsalzen wässriger Lösungen mittels Ionenaustauschermassen**
Process and apparatus for desalination of aqueous solutions with ion exchange masses
Procédé et appareil pour déminéraliser des solutions aqueuses à l'aide de masses échangeuses d'ions

(30) Priorität: 14.11.1992 DE 4238532
(43) Veröffentlichungstag der Anmeldung: 25.05.1994
(73) Patentinhaber: Kunz, Gerhard, Dipl.-Chem. Dr. Ing., D-42579 Heiligenhaus (DE)
(72) Erfinder: Kunz, Gerhard, Dipl.-Chem. Dr. Ing., D-42579 Heiligenhaus (DE)
(74) Vertreter: Merten, Fritz

(56) Entgegenhaltungen:
- EP-A- 0 337 050
- DE-A- 2 025 681
- DE-A- 4 116 278
- GB-A- 744 059
- GB-A- 1 025 411

## Beschreibung

Die Erfindung bezieht sich auf ein Verfahren zum Entsalzen wäßriger Lösungen mittels kornförmiger, in getrennten Filterbehältern geschichteter Kationen- und Anionenaustauschermassen, nebst anschließender Regeneration dieser Austauschermassen, wobei diese Massen Beladungs-Regeneriervorgängen ausgesetzt werden.

Es ist seit langem bekannt, wäßrige Lösungen, wie beispielsweise Wasser, mittels Ionenaustauschermassen zu behandeln, z. B. zu entsalzen, und diese Ionenaustauschermassen nach abgeschlossener Entsalzung bzw. Behandlung der Lösung wieder zu regenerieren, um diese einer erneuten Behandlung der wäßrigen Lösung zuzuführen. Als Ionenaustauschermassen werden dabei Kationen- und Anionenaustauschermassen verwendet, die in der Regel kornförmig vorliegen und die in Behältern, durch die die wäßrige Lösung abwechselnd durch die jeweilige Austauschermasse geleitet wird, aufgefüllt werden.

Während die bisherige Regeneration der Ionenaustauschermassen weitgehend durch Zufuhr spezieller Säuren und/oder Laugen geschah, wurden indessen auch Verfahren bekannt, bei denen die Ionenaustauschermassen zum Zwecke deren Regeneration elektrischen Spannungsfeldern ausgesetzt wurden, so daß durch die Erzeugung jeweiliger Ionen an den eingesetzten Elektroden der Austausch von Metallionen u. a. vorgenommen werden konnte.

Bei einem solchen vorbekannten Verfahren nach der DE-OS 38 05 813 werden die Ionenaustauschermassen, zum Zwecke deren Regeneration, elektrischen Spannungsfeldern ausgesetzt, die pulsierend auf die Ionenaustauschermassen einwirken und denen zusätzlich Wechselspannungen überlagert werden, die der Beschleunigung der Regeneration der Austauschermassen dienen sollen.

Auch ist ein weiteres Verfahren zum Behandeln wäßriger Lösungen mit regenerativer Behandlung der Ionenaustauschermassen nach der EP-PS 113 387 bekannt, bei dem in einem gemeinsamen Gefäß endseitig Elektrodenkammern und dazwischen verschiedene Behandlungskammern für die Lösung und die Regeneration der Austauschermassen vorgesehen sind. Die einzelnen Kammern sind durch Membranen, die für die wandernden Ionen durchlässig sind, von einander getrennt.

Bei diesen Verfahren können sich sowohl in den Funktionsabläufen, als auch in den apparativen Ausführungen ggf. einige Probleme zeigen, die vor allem die Regeneration der Anionenaustauschermassen betreffen. So ist es trotz des hohen verfahrenstechnischen und apparativen Aufwandes praktisch nicht immer möglich, ausreichend große Regenerierkapazitäten zu erzielen, wie sie aus der Regeneration mit zugeführten Regenerierchemikalien her bekannt sind. Insbesondere anionische Salzkomponenten, die zu ihrer Desorption hohe pH-Werte erfordern, können bei der Regeneration nicht immer entfernt werden. Grund für dieses sehr nachteilige Verhalten ist der oft hohe, elektrische Widerstand der Ionenaustauschermassen, der zur Überwindung hohe elektrische Spannungen erfordert und diese wiederum einen Ionenfluß geringer und damit nicht ausreichender Konzentration zur Folge haben. Diese Probleme können, trotz der oft aufwendigen, apparativen Ausführungen auch eine unzureichende Regenerierwirkung bewirken.

Hier setzt die Erfindung ein, der die Aufgabe zugrunde liegt, ein Verfahren und eine Vorrichtung zum Behandeln wäßriger Lösungen mit anschließender Regeneration der Kationen- und Anionenaustauschermassen ohne Verwendung von Membranen und ohne zusätzliche Chemikalien zu schaffen, dabei hohe Regenerierkapazitäten und hohe Entsalzungsqualitäten zu erreichen, den Energieverbrauch niedrig zu halten und insb. die Vorrichtung zur Durchführung des Verfahrens einfach und unempfindlich gegen Verschmutzung und ohne eine aufwendige Steuerung praktikabel und betriebssicher auszuführen.

Gemäß der Erfindung wird diese Aufgabe bei einer der möglichen Ausführungen verfahrenstechnisch dadurch gelöst, daß
a) in einem Gleichspannungsfeld zwischen zwei Elektroden, d. h. einer Anode und einer Kathode, an der Anode Wasserstoffionen erzeugt und diese in die Kationenaustauschermasse eingebracht werden, wo diese Wasserstoffionen eine Verdrängung der, aus der vorangegangenen Entsalzung in dieser Kationenaustauschermasse zurückgebliebenen Kationen (Metallionen, wie Natriumionen u.a.) in Richtung zur Kathode bewirken, und diese verdrängten Kationen zusammen mit an der Kathode gebildeten Hydroxylionen sowohl im Kathodenraum als auch in einem, diesen Kathodenraum umgebenden Speicherraum als Lauge angesammelt werden, und daß
b) mittels der volumetrischen Höhe der in diesem Speicherraum angesammelten Lauge und/oder mittels der Konzentration dieser Lauge einerseits die elektrische Spannung für den weiteren Ionenfluß herabgesetzt und andererseits die Stromstärke bzw. der Ionenfluß zwischen den Elektroden geregelt wird, insb. in der Weise, daß die Geschwindigkeit der Ausschleusung der Lauge aus dem Kathodenraum und der Speicherzone in Abhängigkeit von der Höhe der Stromstärke erfolgt, und daß
c) die bei der elektrischen Regeneration der Kationenaustauschermasse kathodisch gebildete Lauge zur Regeneration der Anionenaustauschermasse in diese Masse eingeschleust wird, und daß
d) als Abschluß der regenerativen Vorgänge in den Ionenaustauschermassen die Spülung beider Austauschermassen jeweils entgegengesetzt zur vorangegangenen Richtung der Verdrängung der Ionen bei der Regeneration derselben erfolgt, und daß
e) die zu entsalzende, wäßrige Lösung, insb. ein zu entsalzendes Wasser, zunächst durch die Kationenaustauschermasse und anschließend durch die Anionenaustauschermasse und durch beide Massen entgegengesetzt zur Richtung der Verdrängung der Ionen bei der Regeneration der Kationen- und Anionenaustauschermasse erfolgt.

Eine Vorrichtung zum Durchführen dieses Verfahrens, bestehend aus einem Gefäß mit mindestens zwei in diesem vorgesehenen Filterkammern für in diesen Kammern jeweils eine zu behandelnde Ionenaustauschermasse, wobei jede Kammer mit Zu- und Ableitungen für die durch die Ionenaustauschermassen zu leitenden Flüssigkeiten ausgestattet ist, zeichnet sich dadurch aus, daß jeweils mindestens eine Filterkammer (1) mit Kationenaustauschermasse (3) und jeweils mindestens eine andere Filterkammer (14) mit Anionenaustauschermasse (15) aufgefüllt ist, und daß jeweils die mit Kationenaustauschermasse (3) aufgefüllte Filterkammer (1) mit Elektroden (4,5) ausgerüstet ist, von denen die eine Elektrode (4) als Anode und die andere Elektrode (5) als Kathode geschaltet ist, und diese als Anode geschaltete Elektrode (4) im Bereich des einen Endes (oberes Ende) und die als Kathode geschaltete Elektrode (5) im Bereich des anderen Endes (unteres Ende) dieser Filterkammer (1) angeordnet ist, und daß im Bereich der als Anode geschalteten Elektrode (4) ein Expansionsraum (22) für die Kationenaustauschermasse (3) vorgesehen ist, während die als Kathode geschaltete Elektrode (5) von einem, die Kationenaustauschermasse (3) abhaltenden, jedoch die Flüssigkeit durchlassenden Filtermedium (6) umgeben ist, welches einen Kathodenraum (7) bildet, an dem eine Zuleitung (Steigrohr 8) für die zu entsalzende, wäßrige Lösung (Rohwasser) und eine Ableitung für die bei der Regeneration der Ionenaustauschermasse entstehenden Elektrolytgase angeschlossen ist, und daß dieser Kathodenraum (7) über eine weitere, absperrbare Leitung mit dem Bereich des einen Endes der mit Anionenaustauschermasse (15) gefüllten Filterkammer (14) verbunden ist, und daß auch diese Filterkammer einen Expansionsraum (23) für die Anionenaustauschermasse, wie auch ein Filtermedium (13) für den Durchtritt der Lauge in die Filterkammer (14) besitzt und einen Austritt (Rohrleitung 12) für entsalzte, wäßrige Lösung aus dieser Kammer aufweist, und daß beide Filterkammern (1, 14) über eine Leitung (30) endseitig verbunden sind, über die kationisch behandelte Lösung in die mit Anionenaustauschermasse (15) gefüllte Filterkammer (14) im Bereich deren einen Endes eingeleitet wird, welche Lösung diese Filterkammer (14) im Bereich deren anderen Endes als Produktflüssigkeit verläßt.

Ausgehend von diesen verfahrensmäßigen Abläufen und apparativen Aufbauten für die Behandlung wäßriger Lösungen mittels kornförmiger, regenerierbarer Kationen- und Anionenaustauschermassen wurde nun gefunden, daß ohne Zuführung von Regenerierchemikalien von außen und ohne Verwendung selektiver Ionenaustauschmembranen, dann die höchste Regenerierkapazität bei gleichzeitig geringstem Energieverbrauch erzielt wird, wenn nur die Kationenaustauschermasse der regenerativen Wirkung eines elektrischen Gleichspannungsfeldes ausgesetzt wird und die dabei kathodisch erzeugte Lauge aufkonzentriert, im Bereich der Kathode und in einem Teil der Kationenaustauschermasse zwischengespeichert und dann als Regeneriermittel für die Anionenaustauschermasse verwendet wird.

Durch diese verfahrens- und vorrichtungsgemäßen Maßnahmen einer regenerativen Kationenverdrängung im elektrischen Feld zur Kathode hin und die Speicherung und Aufkonzentrierung der dort gebildeten Lauge in einem Kathodenraum und in einer Speicherzone innerhalb der Kationenaustauschermasse sowie die Einleitung derselben in die Filterkammer für Anionenaustauschermasse und ihre dortige Verwendung als Regeneriermittel für die Anionenaustauschermasse und schließlich einer der Regeneration nachfolgenden Entsalzung zuerst mittels der Kationenaustauschermasse und dann mittels der Anionenaustauschermasse jeweils gegenläufig zu besagten Ionenwanderungen während der regenerativen Behandlung, wird die der Erfindung zugrunde liegende Aufgabe nicht nur vorteilhaft gelöst, sondern es wird auch eine Reihe energetischer, verfahrenstechnischer, apparativer und wirtschaftlicher Vorteile erreicht. Diese Vorteile sind im einzelnen:
a) Durch die Anwendung der elektrischen Regeneration nur auf die Kationenaustauschermasse unter Anreicherung der erzeugten Lauge und durch die Verwendung dieser Lauge als Regeneriermittel für die Anionenaustauschermasse werden der bisher notwendige apparative Aufwand für eine elektrische Regeneration dieser Masse, wie auch die dafür notwendigen Regel- und Steuereinheiten eingespart.
   Ferner entfällt der elektrische Energieaufwand für diesen Verfahrensschritt, der wegen des hohen elektrischen Widerstandes, speziell dieser Masse sehr groß ist. Die Desorption der anionischen Salzkomponenten, speziell der nur wenig dissoziierten, erfolgt wesentlich leichter und vollständiger, es werden hohe pH-Werte erzielt und damit auch kolloidale Abscheidungen, wie z. B. Silikate, entfernt. Dies resultiert in einer deutlich besseren Produktqualität, insbesondere bei hohem Anteil besagter Stoffe in der zu behandelnden, wäßrigen Lösung bzw. im zu entsalzenden Rohwasser.
b) Die Verwendung der kathodisch erzeugten Lauge, z. B. Natronlauge, als Regeneriermittel für die Anionenaustauschermasse hat noch den zusätzlichen Vorteil, daß diese Lauge bei ihrer Bildung aufgewärmt wird und diese Wärme die Desorption der erwähnten Wasserinhaltsstoffe besonders unterstützt, ohne jedoch eine Überhitzung und damit Zerstörung der aktiven Gruppen, wie sie bei elektrischen Regenerationen auftritt, zu bewirken.
c) Die Aufkonzentrierung der Lauge im Bereich der Kathode und die Ansammlung derselben in einer Speicherzone der Kationenaustauschermasse setzt den elektrischen Widerstand zwischen den Elektroden herab. Dadurch ergibt sich eine niedrigere Spannung für die vorgesehene Stromstärke bzw. den Ionenfluß und damit ein erheblich niedrigerer Energieverbrauch und eine viel geringere Wärmeentwicklung. Kühlmaßnahmen können deshalb einfacher ausgeführt werden oder sie können ganz entfallen. Der ökonomische Vorteil liegt also einerseits in geringeren Energiekosten und andererseits in einem geringeren, apparativen Aufwand.
d) Durch die erfindungsgemäße Ansammlung der kathodisch erzeugten Lauge im Bereich der Kathode und in einer Speicherzone der Kationenaustauschermasse wird bei konstanter Spannung zwischen den Elektroden eine große Abhängigkeit der Stromstärke von der Konzentration besagter Lauge erzielt. Dies bietet den Vorteil, daß die erfindungsgemäße Stromstärkeregelung mittels Veränderung der Laugenkonzentration durch entsprechend angepaßte Laugenausschleusung äußerst einfach ausgeführt werden kann, was eine kostengünstigere Auslegung der Vorrichtungen für die elektrische Energieversorgung, also eine Herabsetzung der Investitionskosten, bedeutet.
e) Während der Regeneration werden die aus der behandelten Lösung bzw. dem entsalzten Rohwasser stammenden und von den Austauschermassen absorbierten Kationen und Anionen aus den jeweils oberen Austauscherschichten in die jeweils unteren verdrängt, und zwar die kationischen durch die an der Anode erzeugten Wasserstoffionen H⁺ und die anionischen durch die in Form einer Lauge eingeleiteten Hydroxylionen OH⁻. Die jeweils oberen Schichten sind somit am längsten und am intensivsten der Einwirkung dieser regenerativen Ionen ausgesetzt, wodurch sich in diesen Zonen die niedrigsten Restkonzentrationen der desorbierten Ionensorten in der Austauschermasse befinden. Durch die weitere, erfindungsgemäße Maßnahme, den einer Regeneration folgenden Entsalzungsvorgang gegenläufig zu den jeweiligen Verdrängungsvorgängen durchzuführen, ergibt sich der Vorteil, daß hohe Entsalzungseffekte, d. h. niedrige Restsalzkonzentrationen im Produkt erzielt werden. Das wiederum beruht darauf, daß die Restsalzkonzentrationen bei einem Entsalzungsvorgang durch die Ionenaustauschgleichgewichte der zuletzt durchströmten Austauscherschichten bestimmt werden.

Eine weitere vorteilhafte Weiterbildung der Erfindung zeichnet sich in verfahrenstechnischer Hinsicht dadurch aus, daß mindestens eine vorbestimmte Stromstärke als Grenzwert für die Beendigung und/oder den Neubeginn der regenerativen Vorgänge bzw. Zyklen in den Ionenaustauschermassen eingestellt wird.

Ebenso besteht eine vorteilhafte Weiterbildung darin, daß die Ausschleusung der Lauge aus dem Kathodenraum und/oder der Speicherzone in Abhängigkeit von deren Konzentration erfolgt.

Durch diese Maßnahmen der Einstellung des Grenzwertes einerseits und die Ausschleusung der Lauge, mittels der Laugekonzentration andererseits, zu steuern und/oder mittels einer vorbestimmten Mindestkonzentrationsänderung der Lauge die regenerative Behandlung der Ionenaustauschermassen zu beenden, bzw. die erneute Behandlung der wäßrigen Lösung einzuleiten, bietet den großen Vorteil, daß der erzielte Regeneriergrad von den Bedingungen der vorangegangenen Entsalzung des Rohwassers bzw. der Lösung, also der Menge und Konzentration des behandelten Rohwassers, unabhängig ist, und daß somit stets der gleiche Regeneriergrad erreicht wird. Von besonderem Vorteil ist diese Maßnahme, wenn im praktischen Betrieb erst teilweise beladene Ionenaustauschermassen erneut auf volle Entsalzungskapazität gebracht werden sollen.

Eine weitere vorteilhafte Weiterbildung der Erfindung zeichnet sich in apparatespezifischer Hinsicht dadurch aus, daß die Filterkammer für die Kationenaustauschermasse mit mindestens einem Kühlmittel ausgestattet ist.

Durch diese Maßnahme, mit Hilfe von Kühlmitteln die Wärmeabführung aus der Filterkammer für Kationenaustauschermasse während der Regeneration zu beschleunigen, ergibt sich folgender Vorteil:
Die elektrische Regeneration der Kationenaustauschermasse beinhaltet eine Reihe exothermer Reaktionen, deren gebildete Wärme abgeführt werden muß, wobei diese Abführung im thermodynamischen Gleichgewicht die Zuführung der elektrischen Energie für die Regeneration begrenzt. Durch die erfindungsgemäße Beschleunigung der Wärmeabführung kann somit eine höhere Stromstärke eingesetzt und damit der Regeneriervorgang erheblich beschleunigt werden. Dies wirkt sich in einer größeren Entsalzungsleistung bzw. in einem größeren Produktausstoß pro Zeiteinheit aus.

Eine weitere vorteilhafte Weiterbildung der Erfindung zeichnet sich in apparatespezifischer Hinsicht dadurch aus, daß je eine Filterkammer für Kationenaustauschermasse und eine Filterkammer für Anionenaustauschermasse eine Funktionseinheit bilden, und diese Funktionseinheit in getrennten Gefäßen (Filtergehäuse), aber nebeneinander, angeordnet sind.

Diese Maßnahme hat den Vorteil einer niedrigeren Bauhöhe.

Eine weitere Ausgestaltung der Erfindung besteht in verfahrensspezifischer Weise darin, daß
a) die in einem Gleichspannungsfeld zwischen zwei Elektroden an einer Anode in einem Anodenraum erzeugten Wasserstoffionen in eine Kationenaustauschermasse eingebracht werden, und diese Kationenaustauschermasse mittels kationendurchlässiger Grenzschichten, wie z. B. Ionenaustauschermembranen, in mindestens zwei Zonen aufgeteilt ist, deren eine Zone von der zu behandelnden wäßrigen Lösung, insb. einem Rohwasser, und die andere von vorbehandeltem Wasser durchströmt wird, und daß
b) die eingebrachten Wasserstoffionen die von der Austauschermasse aus den durchströmenden Wässern aufgenommenen Kationen (Metallionen, wie z. B. Natriumionen) in Richtung zur Kathode verdrängen sowie diese verdrängten Kationen mit den an der Kathode gebildeten Hydroxylionen in einem Kathodenraum als Lauge angesammelt werden, und daß
c) mittels deren Konzentration die Ausschleusung der Lauge geregelt wird, wobei die kathodisch gebildete Lauge zur Regeneration der Anionenaustauschermasse verwendet wird, und diese Anionenaustauschermasse in mindestens zwei Filtereinheiten unterteilt ist, die abwechselnd der regenerativen Behandlung unterworfen werden, und nach Abschluß der regenerativen Vorgänge die jeweilige Spülung der Ionenaustauschermasse entgegengesetzt zur Verdrängungsrichtung der Ionen bei der Regeneration erfolgt, und daß
d) die zu entsalzende, wäßrige Lösung, insb. das Wasser, zunächst durch die dem Kathodenraum benachbarte Kationenaustauscherzone geleitet wird, kann durch das jeweils regenerierte Anionenfilter, ebenfalls im Gegenstrom zur Verdrängungsrichtung der Ionen während der Regeneration und schließlich als vorbehandelte Lösung bzw. Wasser der dem Anodenraum benachbarten Kationenaustauscherzone zugeführt und aus dieser als Produkt abgeleitet wird.

Eine diesem Verfahrensschritt in vorteilhafter Weise dienende Vorrichtung, zeichnet sich dadurch aus, daß
a) eines der Gefäße mindestens zwei Filterkammern, gefüllt mit Kationenaustauschermasse und zwei Elektrodenkammern für Anoden und Kathoden aufweist, und alle Kammern gegenseitig mit kationendurchlässigen Grenzschichten, wie z. B. Ionenaustauschermembranen, abgeschirmt sind, und daß
b) die beiden anderen Gefäße jeweils mindestens eine Kammer enthalten, die mit Anionenaustauschermasse aufgefüllt ist, und daß
c) diese Kammern beider Gefäße an die Kathodenkammer des ersten Gefäßes mittels Rohrleitungen und Absperrorganen für die wechselseitige Zuführung von Lauge angeschlossen sind, als auch mittels Leitungen und Absperrorganen mit den Kationenaustauscherkammern für die wechselseitige Zuleitung des zu behandelnden und die Ableitung des behandelten Wassers verbunden sind.

Durch den vorstehenden, letztgenannten Verfahrensschritt einerseits und die dazu konzipierte Vorrichtung andererseits im Sinne einer regenerativen Kationenverdrängung im elektrischen Feld zur Kathode hin und die Aufkonzentrierung der dort gebildeten Lauge in einem Kathodenraum sowie die Einleitung derselben in die Filterkammern für Anionenaustauschermasse und ihre Verwendung als Regeneriermittel für die Anionenaustauschermasse sowie ferner die Unterteilung der Kationenaustauschermasse in mittels kationendurchlässigen Grenzschichten bzw. Membranen abgeschirmten Kammern und die wechselseitige Regeneration bzw. Beladung von Anionenfiltern, werden weitere energetische, verfahrenstechnische und wirtschaftliche Vorteile erreicht. Diese Vorteile sind im einzelnen:
a) Durch die Aufteilung der Kationenaustauschermasse in Kammern und deren Abschirmung mittels kationendurchlässiger Membranen kann die regenerative Behandlung der Kationenaustauschermasse gleichzeitig mit dem Entsalzungsvorgang erfolgen. Dadurch wird das Speichervolumen der Kationenaustauschermasse reduziert und der Elektrodenabstand verringert. Dies wiederum bewirkt einen geringeren elektrischen Widerstand zwischen den Elektroden, also eine erhebliche Energieeinsparung. Außerdem wird die Entsalzungsleistung erheblich gesteigert, weil die Produktion kontinuierlich erfolgt. Hinzu kommt als weiterer Vorteil eine Eigenkühlung der Ionenaustauscherkammern aufgrund des kontinuierlichen Durchflusses. Diese Vorteile werden umso gravierender, je größer die gewünschte Entsalzungsleistung ist.
b) Einen besonderen Vorteil bietet ferner die Einleitung des aus den Anionenfiltern abfließenden, vorbehandelten Wassers in die der Anodenkammer benachbarten Kationenaustauscherkammer. Dadurch werden Laugereste aus der vorangegangenen Regeneration der Anionenfilter entfernt, was in einer deutlichen Verbesserung der Produktqualität resultiert. Diese Maßnahme bietet ferner den Vorteil, daß die Spülzeiten verkürzt und die Spülmengen der Anionenfilter verringert werden können.
c) Besonders bei großen Entsalzungseinheiten kann auf diese Weise ein in der Regel gewünschter kontinuierlicher Betrieb erzielt werden und dies unter Beibehaltung der bereits beschriebenen Vorteile, die eine Verwendung der kathodisch erzeugten Lauge als Regeneriermittel für die Anionenaustauschermasse erbringt.

Weitere vorteilhafte Weiterbildungen der Erfindung können den verbleibenden Unteransprüchen entnommen werden, für die, soweit möglich, selbständiger Schutz, im Rahmen des hier Offenbarten, begehrt wird.

In den Zeichnungen sind zwei der möglichen Ausführungsbeispiele der Erfindung schematisch dargestellt, ohne die Erfindung allein auf diese Ausführungsbeispiele zu beschränken. Es zeigt:
- Fig. 1: Einen Längsmittelschnitt durch eine Vorrichtung mit zwei übereinander in einem gemeinsamen, zylindrischen Gefäß angeordneten Filterkammern für Ionenaustauschermassen und mit Zu- und Ableitungen für die Flüssigkeitsströme sowie zugehörigen Absperrorganen, und
- Fig. 2: Einen Längsmittelschnitt durch eine weitere Vorrichtung mit einem mittels Membranen in Filtrationskammern unterteiltem Gefäß und zweier Gefäße mit Filterkammern für Anionenaustauschermasse mit den Verbindungsleitungen für die Flüssigkeitsströme sowie zugehörigen Absperrorganen.

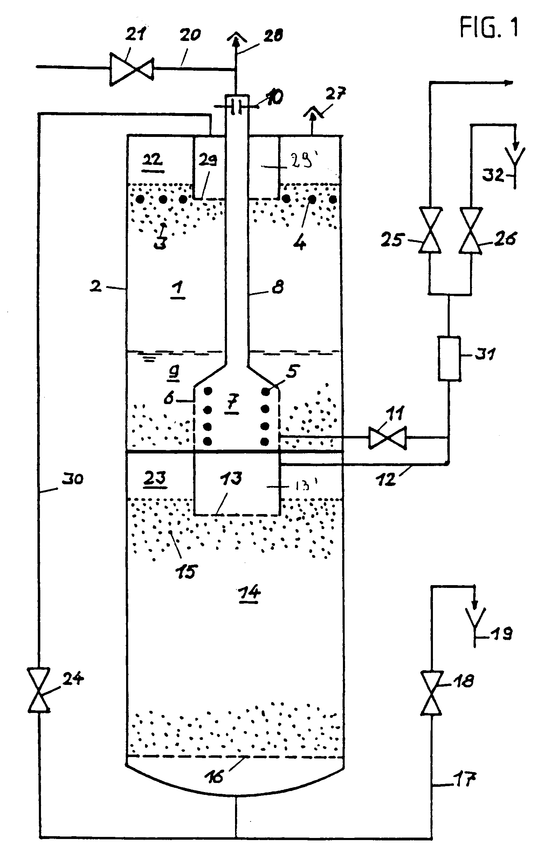

Bei dem Ausführungsbeispiel nach Fig. 1 zur Behandlung wäßriger Lösungen, wie Rohwässer u. a. und anschließender Regeneration der Ionenaustauschermassen erfolgt die regenerative Behandlung der in einer Filterkammer 1 eines Filterbehälters 2 geschichteten, kornförmigen Kationenaustauschermasse 3 in einem elektrischen Gleichspannungsfeld, das zwischen einer Anode 4 und einer Kathode 5 mittels einer, in der Zeichnung nicht dargestellten, jedoch an sich bekannten Vorrichtung erzeugt wird. Als eine mögliche Ausführung ist die Anode 4 als horizontale und die Kathode 5 als vertikale Drahtspirale dargestellt. Die an der Anode 4 gebildeten Wasserstoffionen wandern nun unter dem Einfluß des elektrischen Feldes durch die Kationenaustauschermasse 3 in Richtung der Kathode 5. Dabei werden die Wasserstoffionen von dieser Masse absorbiert und gleichzeitig werden die in der Austauschermasse 3 bereits absorbierten, aus der vorangegangenen Entsalzung stammenden, Kationen, beispielsweise Natriumionen, verdrängt die dann durch ein, beispielsweise zylindrisch ausgeführtes, Filtermedium 6 zur Kathode 5 hin wandern, wo sie mit den dort erzeugten Hydroxylionen eine Lauge bilden. Diese Lauge wird im Kathodenraum 7, im zugehörigen Steigrohr 8 und in einer Speicherzone 9 angesammelt, wobei gleichzeitig ihre Konzentration ständig zunimmt und die mittels einer Leitfähigkeitsmeßvorrichtung 10 ermittelt werden kann.

Die Ausschleusung der Lauge erfolgt mittels eines Ventils 11, und die Einleitung in den oberen Bereich der Anionenaustauschermasse 15, die in der Filterkammer 14 des Filterbehälters 2 geschichtet ist, erfolgt mittels einer Rohrleitung 12 durch eine Filterplatte 13 aus einem Filterraum 13'.

Die Lauge fließt nun durch die Anionenaustauschermasse 15 nach unten und wird durch eine Filterplatte 16, eine Rohrleitung 17 und ein weiteres Ventil 18 als Salzsole in einen Kanal 19 geleitet. Bei dieser Durchströmung werden bekannterweise die Hydroxylionen von der Austauschermasse absorbiert und gleichzeitig die bereits absorbierten, aus der vorangegangenen Entsalzung stammenden Anionen, beispielsweise Sulfationen, Chloridionen u. a., durch die Hydroxylionen der Lauge verdrängt, wobei sie mit den Metallionen der Lauge, beispielsweise Natriumionen, die entsprechenden Salze bilden.

Das aus dem Kathodenraum 7 ausgeschleuste Flüssigkeitsvolumen der Lauge wird über eine Zuleitung 20 durch frische, wäßrige Lösung, z. B. Rohwasser oder enthärtetes Wasser, ständig ersetzt, wobei ein Druckminderer 21 den Druck in der Filterkammer 1 konstant hält.
Die Menge der pro Zeiteinheit mittels des Ventils 11 ausgeschleusten Lauge wird nun dadurch geregelt, daß das Ventil 11 in Abhängigkeit vom Stromfluß zwischen den Elektroden 4 und 5 angesteuert wird. Auf diese Weise wird für eine vorgegebene, elektrische Spannung mittels der sich anpassenden Laugekonzentration und mittels dem sich einstellenden Laugeniveau in der Speicherzone 9 stets die optimale Stromstärke, also auch der Ionenfluß und damit eine optimale Regenerierwirkung zwischen den Elektroden erreicht.

Mit fortschreitender Regeneration nimmt der Fluß der desorbierten Ionen, z. B. der Natriumionen, und damit auch die elektrische Stromstärke, ab. Diese Abnahme wird in Form eines vorherbestimmbaren Grenzwertes als Signal für die Beendigung der regenerativen Behandlung verwendet.

Eine andere vorteilhafte Art der Regelung der Laugenausschleusung besteht darin, daß das Ventil 11 in Abhängigkeit von der Laugekonzentration, die mittels der Leitfähigkeitsmeßvorrichtung 10 ermittelt wird, angesteuert wird. Auf diese Weise wird die Konzentration der Lauge auf einem geeigneten Wert, z. B. 2%, konstant gehalten. Mit abnehmendem Fluß der desorbierten Ionen wird immer weniger Lauge ausgeschleust. Bei intermittierender Betätigung des Ventils 11 nimmt also bei konstanter Öffnungszeit die Anzahl der Öffnungen pro Zeiteinheit ab. Bei kontinuierlicher Betätigung des Ventils 11 nähert sich das Ventil der geschlossenen Position.
Die Häufigkeit der Betätigung oder die Position des Ventils 11 wird deshalb als Signal für die Beendigung der regenerativen Behandlung verwendet und kann zudem als Signal für die Einschaltung der folgenden Zyklen, wie Spülvorgänge und erneute Behandlung der wäßrigen Lösung benutzt werden.

Die Ansteuerung des Ventils 11 erfolgt in an sich bekannter Weise und ist in der Zeichnung nicht dargestellt.

Beide Ionenaustauschermassen vergrößern ihr Volumen während der Regeneration. Zur Aufnahme dieser Volumina ist für die Filterkammer 1 ein Expansionsraum 22 und für die Filterkammer 14 ein weiterer Expansionsraum 23 vorgesehen.

Während der Regeneration sind die Ventile 24, 25 und 26 geschlossen. Das Ventil 18 ist geöffnet.

Die an den Elektroden, d. h. der Anode 4 und Kathode 5, ablaufenden, chemischen Reaktionen setzen Gase frei. Der anodisch erzeugte Sauerstoff wird durch ein Entgasungsventil 27, beispielsweise einen Entlüfter, aus der Filterkammer 1 und der kathodisch erzeugte Wasserstoff durch ein Entgasungsventil 28 aus dem Steigrohr 8 und dem Kathodenraum 7 ausgeschleust.

Nach Beendigung der regenerativen Phase werden die Ventile 11 und 18 geschlossen und die Ventile 24 und 26 geöffnet. Das Rohwasser, z. B. enthärtetes Wasser, gelangt nun über einen Druckminderer 21, eine Zuleitung 20, das Steigrohr 8 und das Filtermedium 6 in die Filterkammer 1, wo es die körnige Kationenaustauschermasse 3 von unten nach oben, also gegenläufig zur Ionenwanderung während der Regeneration, durchströmt, ohne diese Masse umzuschichten. Dabei werden in bekannter Weise die Kationen des Wassers gegen die in der Austauschermasse gespeicherten Wasserstoffionen ausgetauscht und die obersten, im Bereich der Anode 4 am besten regenerierten Schichten, zuletzt durchströmt. Durch diese, dem Regeneriervorgang gegenläufige Behandlung des zu entsalzenden Rohwassers wird ein sehr hoher Austauschgrad bzw. eine sehr geringe Restkonzentration an metallischen Kationen im behandelten Wasser erreicht.

Aus der Filterkammer 1 fließt das Wasser durch eine Filterplatte 29, eine Rohrleitung 30, ein Ventil 24 und durch die Filterplatte 16 in die Filterkammer 14 und durchströmt die Anionenaustauschermasse 15, ohne diese umzuschichten, im Aufstrom, also ebenfalls gegenläufig zur regenerativen Behandlung mit der Lauge. In bekannter Weise werden dabei die anionischen Inhaltsstoffe des Wassers gegen die in der Austauschermasse gespeicherten Hydroxylionen ausgetauscht, die ihrerseits mit den aus der Filterkammer 1 stammenden Wasserstoffionen zu Wasser rekombinieren.

Die behandelte Lösung, z. B. das entsalzte Wasser, gelangt durch die Filterplatte 13 in die Rohrleitung 12 und in eine Meßvorrichtung 31 für die Messung der elektrischen Leitfähigkeit des Wassers und zunächst durch das Ventil 26 in den Kanal 32, weil es noch Laugenreste aus der Filterkammer 14 enthält. Wenn das Ende dieser Spülphase durch eine entsprechend niedrige Leitfähigkeit, z. B. 15 µS, an der Meßvorrichtung 31 angezeigt wird, wird das Ventil 26 geschlossen und das entsalzte Wasser als Produkt durch das Ventil 25 zum Verbraucher abgeleitet.

Mit zunehmender Erschöpfung der Ionenaustauschermassen nimmt der Entsalzungseffekt ab. Die Restsalzkonzentration und damit die elektrische Leitfähigkeit im Produktwasser steigt an. Bei Überschreitung eines vorgegebenen Grenzwertes kann nun mittels der Meßvorrichtung 31 und mittels an sich bekannter Schaltvorrichtungen eine erneute Regeneration ausgelöst werden.

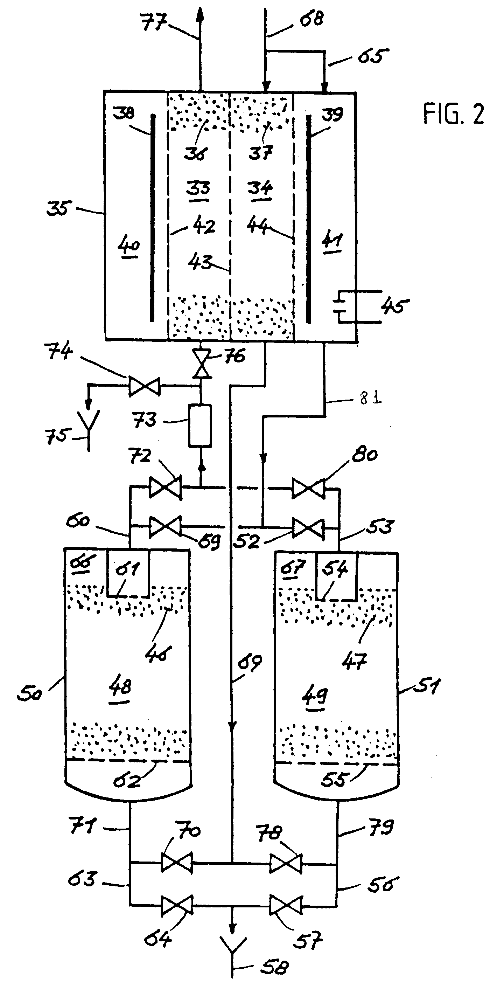

Bei dem Ausführungsbeispiel nach Fig. 2 zur Behandlung wäßriger Lösungen laufen die Verfahrensvorgänge etwa in analoger Weise ab, jedoch mit dem Unterschied, daß die regenerative Behandlung der in den Filterkammern 33 und 34 des Filterbehälters 35 geschichteten Kationenaustauschermassen 36,37 in einem elektrischen Gleichspannungsfeld, das zwischen der Anode 38 und der Kathode 39 mittels einer, in der Zeichnung nicht dargestellten, Vorrichtung erzeugt wird.

Die mit einem Elektrolyten, beispielsweise verdünnte Schwefelsäure, oder einem Festelektrolyten, z. B. Kationenaustauschermassen o. a., gefüllte Anodenkammer 40, die Kathodenkammer 41, und die beiden Kationenaustauscherkammern bzw. Filterkammern 33 und 34 sind gegenseitig durch die als Membranen ausgebildeten kationendurchlässigen und anionensperrenden sowie flüssigkeitsundurchlässigen Grenzschichten 42,43,44 abgeschirmt. Die an der Anode 38 gebildeten Wasserstoffionen wandern unter dem Einfluß des elektrischen Feldes durch die Grenzschichten 42,43,44 und durch die Kationenaustauschermassen 36,37 in Richtung der Kathode 39. Dabei werden die Wasserstoffionen von diesen Massen absorbiert und gleichzeitig werden die von den zu behandelnden Flüssigkeitsströmen eingebrachten und an den Massen absorbierten Kationen, beispielsweise Natriumionen, verdrängt und wandern zur Kathode 39, wo sie mit den dort erzeugten Hydroxylionen eine Lauge bilden. Diese Lauge wird im Kathodenraum 41 angesammelt, wobei ihre Konzentration ständig zunimmt und die mittels einer Leitfähigkeitsmeßvorrichtung 45 ermittelt werden kann.

Die gebildete Lauge wird nun zur Regeneration der Anionenaustauschermassen 46,47 verwendet, die sich in den Filterkammern 48,49 der Filterbehälter 50,51 befinden. Die Regeneration der Massen erfolgt abwechselnd nach ihrer jeweiligen Beladung. Wird die Masse im Filterbehälter 51 regeneriert, so erfolgt die Ausschleusung der Lauge über die Rohrleitung 81 mittels Ventil 52, und die Einleitung in den oberen Bereich der Anionenaustauschermassen 47, die in der Filterkammer 49 des Filterbehälters 51 geschichtet ist, erfolgt mittels der Rohrleitung 53 durch die Filterplatte 54.

Die Lauge fließt nun durch die Anionenaustauschermasse 47 nach unten und wird durch den Filterboden 55, die Rohrleitung 56 und das Ventil 57 als Salzsole in den Kanal 58 geleitet. Bei dieser Durchströmung werden, wie bei Fig. 1 beschrieben, aus den verdrängten Anionen und den Metallionen der Lauge die entsprechenden Salze gebildet.

Wird die Masse im Filterbehälter 50 regeneriert, so erfolgt die Ausschleusung der Lauge mittels Ventil 59, und die Einleitung in den oberen Bereich der Anionenaustauschermasse 46, die in der Filterkammer 48 des Filterbehälters 50 geschichtet ist, erfolgt mittels der Rohrleitung 60 durch die Filterplatte 61.

Die Lauge fließt nun durch die Anionenaustauschermasse 46 nach unten und wird durch den Filterboden 62, die Rohrleitung 63 und das Ventil 64 als Salzsole in den Kanal 58 geleitet.

Das aus dem Kathodenraum 41 ausgeschleuste Flüssigkeitsvolumen wird über die Zuleitung 65 durch Rohwasser, z. B. enthärtetes Wasser, ständig ersetzt.

Die Regelung der Laugenausschleusung besteht nun darin, daß für die Regeneration der Anionenaustauschermasse 47 das Ventil 52 zusammen mit Ventil 57 oder bei voll geöffnetem Ventil 57 in Abhängigkeit von der Laugenkonzentration, die mittels der Leitfähigkeitsmeßvorrichtung 45 ermittelt wird, angesteuert wird. Für die Regeneration der Anionenaustauschermasse 46 werden sinngemäß die Ventile 59 und 64 angesteuert.

Auf diese Weise wird die Konzentration der Lauge auf einen geeigneten Wert, z. B. 2%, konstant gehalten.

Die Ansteuerung der Ventile erfolgt in an sich bekannter Weise und ist in der Zeichnung nicht dargestellt.

Die Anionenaustauschermassen vergrößern ihr Volumen während der Regeneration. Zur Aufnahme dieser Volumina ist für die Filterkammer 48 der Expansionsraum 66 und für die Filterkammer 49 der Expansionsraum 67 vorgesehen.

Die zu behandelnde Flüssigkeit, z. B. enthärtetes Wasser, wird mittels der Rohrleitung 68 in die Kationenaustauscherkammer 34 eingeleitet, durchströmt die Kationenaustauschermasse 37 von oben nach unten und gelangt durch die Rohrleitung 69 in den jeweils nicht in Regeneration befindlichen Filterbehälter 50 oder 51. Ist beispielsweise der Filterbehälter 51 für Anionen in Regeneration, so gelangt die Flüssigkeit durch Ventil 70, die Rohrleitung 71 und durch den Filterboden 62 in die Filterkammer 48. Hier durchströmt die Flüssigkeit die Anionenaustauschermasse 46 von unten nach oben, also gegenläufig zur Durchströmungsrichtung der Lauge während der vorangegangenen Regeneration, wobei zunächst die Lauge verdrängt wird und dann die Anionen der Flüssigkeit von der Ionenaustauschermasse absorbiert werden. Diese zunächst verdrängte Lauge und danach die vorbehandelte Flüssigkeit gelangt nun durch die Filterplatte 61 und das Ventil 72 in die Leitfähigkeitsmeßzelle 73. Ist die Qualität noch schlecht, z. B. durch die verdrängte Lauge bzw. Laugenreste, so wird die Flüssigkeit durch Ventil 74 in den Kanal 75 abgeleitet. Ist die Qualität ausreichend, wird die Flüssigkeit durch Ventil 76 in die Kationenaustauscherkammer 33 geleitet, wo sie die Kationenaustauschermasse 36 durchströmt, die dabei Spuren von Metallionen aufnimmt. Die entsalzte Flüssigkeit wird als Produkt durch die Rohrleitung 77 abgeleitet bzw. dem Verbraucher zugeführt.

Sinngemäß verlaufen diese Prozeßschritte, wenn beispielsweise das Anionenfilter 50 regeneriert wird. Dann gelangt die Flüssigkeit durch Ventil 78, die Rohrleitung 79, den Filterboden 55, die Anionenaustauschermasse 47, die Filterplatte 54 und das Ventil 80 in die Leifähigkeitsmeßzelle 73. Wie bereits beschrieben, wird dann die Flüssigkeit je nach ihrer Qualität entweder in den Kanal 75 oder als entsalztes Produkt durch die Rohrleitung 77 zum Verbraucher abgeleitet.

Mit zunehmender Erschöpfung des Anionenfilters 50 bzw. 51 nimmt der Entsalzungseffekt ab, die Restsalzkonzentration steigt an. Bei Überschreitung eines vorgegebenen Grenzwertes kann nun mittels der Meßvorrichtung 73 und mittels an sich bekannter Schaltvorrichtungen eine Umschaltung der Filterbehälter 50,51 ausgelöst werden.

Der zwischen den Elektroden 38 und 39 fließende, elektrische Strom wird in an sich bekannter Weise in Abhängigkeit von der Entsalzungsleistung geregelt und ist in der Zeichnung nicht dargestellt.

## Patentansprüche

1. Verfahren zum Entsalzen wäßriger Lösungen mittels kornförmiger, in getrennten Filterbehältern geschichteter Kationen- und Anionenaustauschermassen, und Regeneration dieser Austauschermassen, wobei diese Massen Beladungs-Regeneriervorgängen ausgesetzt werden, **dadurch gekennzeichnet**,
daß
a) in einem Gleichspannungsfeld zwischen zwei Elektroden, d. h. einer Anode und einer Kathode, an der Anode Wasserstoffionen erzeugt und diese in die Kationenaustauschermasse eingebracht werden, wo diese Wasserstoffionen eine Verdrängung der, aus der vorangegangenen Entsalzung in dieser Kationenaustauschermasse zurückgebliebenen Kationen (Metallionen, wie Natriumionen u.a.) in Richtung zur Kathode bewirken, und diese verdrängten Kationen zusammen mit an der Kathode gebildeten Hydroxylionen sowohl im Kathodenraum als auch in einem, diesen Kathodenraum umgebenden Speicherraum als Lauge angesammelt werden, und daß
b) mittels der volumetrischen Höhe der in diesem Speicherraum angesammelten Lauge und/oder mittels der Konzentration dieser Lauge einerseits die elektrische Spannung für den weiteren Ionenfluß herabgesetzt und andererseits die Stromstärke bzw. der Ionenfluß zwischen den Elektroden geregelt wird, insb. in der Weise, daß die Geschwindigkeit der Ausschleusung der Lauge aus dem Kathodenraum und der Speicherzone in Abhängigkeit von der Höhe der Stromstärke erfolgt, und daß
c) die bei der elektrischen Regeneration der Kationenaustauschermasse kathodisch gebildete Lauge zur Regeneration der Anionenaustauschermasse in diese Masse eingeschleust wird, und daß
d) als Abschluß der regenerativen Vorgänge in den Ionenaustauschermassen die Spülung beider Austauschermassen jeweils entgegengesetzt zur vorangegangenen Richtung der Verdrängung der Ionen bei der Regeneration derselben erfolgt, und daß
e) die zu entsalzende, wäßrige Lösung, insb. ein zu entsalzendes Wasser, zunächst durch die Kationenaustauschermasse und anschließend durch die Anionenaustauschermasse und durch beide Massen entgegengesetzt zur Richtung der Verdrängung der Ionen bei der Regeneration der Kationen- und Anionenaustauschermasse erfolgt.

2. Verfahren nach Anspruch 1,
**dadurch gekennzeichnet**,
daß mindestens eine vorbestimmte Stromstärke als Grenzwert für die Beendigung und/oder den Neubeginn der regenerativen Zyklen, d. h. die regenerativen Vorgänge, für die Ionenaustauschermassen eingestellt wird.

3. Verfahren nach Anspruch 1,
**dadurch gekennzeichnet**,
daß die Ausschleusung der Lauge aus dem Kathodenraum und/oder der Speicherzone in Abhängigkeit von deren Konzentration in diesen Räumen erfolgt.

4. Verfahren nach den Ansprüchen 1 und 2,
**dadurch gekennzeichnet**,
daß als Grenzwert für die Beendigung der regenerativen Zyklen ein vorbestimmter Mindestwert der Änderung der Konzentration in der kathodisch erzeugten Lauge eingestellt wird.

5. Vorrichtung zum Durchführen des Verfahrens nach den Ansprüchen 1 - 4, bestehend aus einem Gefäß mit mindestens zwei in diesem vorgesehenen Filterkammern für in diesen Kammern jeweils eine zu behandelnde Ionenaustauschermasse, wobei jede Kammer mit Zu- und Ableitungen für die durch die Ionenaustauschermassen zu leitenden Flüssigkeiten ausgestattet ist,
**dadurch gekennzeichnet**,
daß jeweils mindestens eine Filterkammer (1) mit Kationenaustauschermasse (3) und jeweils mindestens eine andere Filterkammer (14) mit Anionenaustauschermasse (15) aufgefüllt ist, und daß jeweils die mit Kationenaustauschermasse (3) aufgefüllte Filterkammer (1) mit Elektroden (4,5) ausgerüstet ist, von denen die eine Elektrode (4) als Anode und die andere Elektrode (5) als Kathode geschaltet ist, und diese als Anode geschaltete Elektrode (4) im Bereich des einen Endes (oberes Ende) und die als Kathode geschaltete Elektrode (5) im Bereich des anderen Endes (unteres Ende) dieser Filterkammer (1) angeordnet ist, und daß im Bereich der als Anode geschalteten Elektrode (4) ein Expansionsraum (22) für die Kationenaustauschermasse (3) vorgesehen ist, während die als Kathode geschaltete Elektrode (5) von einem, die Kationenaustauschermasse (3) abhaltenden, jedoch die Flüssigkeit durchlassenden Filtermedium (6) umgeben ist, welches einen Kathodenraum (7) bildet, an dem eine Zuleitung (Steigrohr 8) für die zu entsalzende, wäßrige Lösung (Rohwasser) und eine Ableitung für die bei der Regeneration der Ionenaustauschermasse entstehenden Elektrolytgase angeschlossen ist, und daß dieser Kathodenraum (7) über eine weitere, absperrbare Leitung mit dem Bereich des einen Endes der mit Anionenaustauschermasse (15) gefüllten Filterkammer (14) verbunden ist, und daß auch diese Filterkammer einen Expansionsraum (23) für die Anionenaustauschermasse, wie auch ein Filtermedium (13) für den Durchtritt der Lauge in die Filterkammer (14) besitzt und einen Austritt (Rohrleitung 12) für entsalzte, wäßrige Lösung aus dieser Kammer aufweist, und daß beide Filterkammern (1, 14) über eine Leitung (30) endseitig verbunden sind, über die kationisch behandelte Lösung in die mit Anionenaustauschermasse (15) gefüllte Filterkammer (14) im Bereich deren einen Endes eingeleitet wird, welche Lösung diese Filterkammer (14) im Bereich deren anderen Endes als Produktflüssigkeit verläßt.

6. Vorrichtung nach Anspruch 5,
**dadurch gekennzeichnet**,
daß die mit Anionenaustauschermasse (15) gefüllte Filterkammer (14) an ihrem der Einführung der zu behandelnden, wäßrigen Lösung dienenden Ende einen durch das Filtermedium (16) gegen die Anionenaustauschermasse (15) abgetrennten Raum (16') aufweist, in den die Zuführungsleitung (30) für die Lösung und die Abführungsleitung (17) für die Sole einmünden.

7. Vorrichtung nach Anspruch 5,
**dadurch gekennzeichnet,**
daß je eine Filterkammer (1) für Kationenaustauschermasse (3) und eine Filterkammer (14) für Anionenaustauschermasse (15) eine Funktionseinheit bilden und diese Funktionseinheit in einem gemeinsamen Gefäß (Filtergehäuse 2) zusammengefaßt sind.

8. Vorrichtung nach Anspruch 7,
**dadurch gekennzeichnet,**
daß die Filterkammer (1) für die Kationenaustauschermasse (3) und die Filterkammer (14) für die Anionenaustauschermasse (15), im gemeinsamen Gefäß (Filtergehäuse 2), übereinander angeordnet sind.

9. Vorrichtung nach Anspruch 5,
**dadurch gekennzeichnet,**
daß die Filterkammer (1) für die Kationenaustauschermasse (3) mit mindestens einem Kühlmittel ausgestattet ist.

10. Vorrichtung nach Anspruch 9,
**dadurch gekennzeichnet,**
daß das Kühlmittel als eine Kühlschlange, und/oder Kühlrippe ausgeführt ist.

11. Vorrichtung nach Anspruch 5,
**dadurch gekennzeichnet,**
daß je eine Filterkammer (1) für Kationenaustauschermasse (3) und eine Filterkammer (14) für Anionenaustauschermasse (15) eine Funktionseinheit bilden, und diese Funktionseinheit in getrennten Gefäßen (Filtergehäuse 2), aber nebeneinander, angeordnet sind.

12. Vorrichtung nach den Ansprüchen 5 und 8,
**dadurch gekennzeichnet,**
daß in jeder Filterkammer (1,14) oberhalb der jeweiligen, in dieser Kammer eingefüllten Ionenaustauschermasse (3,15) je ein Expansionsraum (22,23) für diese jeweilige Masse vorgesehen ist.

13. Vorrichtung nach den Ansprüchen 5 und 12,
**dadurch gekennzeichnet,**
daß innerhalb jedes Expansionsraumes (22,23) je ein Filterraum (13',29') vorgesehen ist, der gegen die jeweilige Filterkammer (1,14) durch eine Filterplatte (29,13) abgetrennt ist, und daß in den Filterraum (29'), der die Kationenaustauschermasse (3) aufnehmenden Filterkammer (1) die Rohrleitung (30) für die Überführung der kationisch behandelten, wäßrigen Lösung in die Filterkammer (14) der Anionenaustauschermasse (15), und daß in den Filterraum (13') der die Anionenaustauschermasse aufnehmenden Filterkammer (14) die Rohrleitung (12) für die Einführung der Lauge bzw. Abführung der behandelten, wäßrigen Lösung einmünden.

14. Verfahren zum Entsalzen wäßriger Lösungen mittels kornförmiger, in getrennten Filterbehältern geschichteter Kationen- und Anionenaustauschermassen und Regeneration dieser Austauschermassen, wobei diese Massen Beladungs- und Regenerationsvorgängen ausgesetzt werden,
**dadurch gekennzeichnet,**
daß
a) die in einem Gleichspannungsfeld zwischen zwei Elektroden an der Anode in einem Anodenraum erzeugten Wasserstoffionen in eine Kationenaustauschermasse eingebracht werden, wobei diese Kationenaustauschermasse mittels kationendurchlässiger Grenzschichten, wie z. B. Ionenaustauschermembranen, in mindestens zwei Zonen aufgeteilt ist, deren eine Zone von zu behandelndem Rohwasser und die andere von vorbehandeltem Wasser durchströmt wird, und daß
b) die eingebrachten Wasserstoffionen die von der Austauschermasse aus den durchströmenden Wässern aufgenommenen Kationen (Metallionen, wie z. B. Natriumionen) in Richtung zur Kathode verdrängen, wobei diese verdrängten Kationen mit den an der Kathode gebildeten Hydroxylionen in einem Kathodenraum als Lauge angesammelt werden, und daß
c) mittels deren Konzentration die Ausschleusung der Lauge geregelt wird, wobei die kathodisch gebildete Lauge zur Regeneration der Anionenaustauschermasse verwendet wird, und diese Anionenaustauschermasse in mindestens zwei Filtereinheiten unterteilt ist, die abwechselnd der regenerativen Behandlung unterworfen werden, und nach Abschluß der regenerativen Vorgänge die jeweilige Spülung der Ionenaustauschermasse entgegengesetzt zur Verdrängungsrichtung der Ionen bei der Regeneration erfolgt, und daß
d) die zu entsalzende wäßrige Lösung, insb. das Wasser, zunächst durch die dem Kathodenraum benachbarte Kationenaustauscherzone geleitet wird, dann durch das jeweils regenerierte Anionenfilter, ebenfalls im Gegenstrom zur Verdrängungsrichtung der Ionen während der Regeneration und schließlich als vorbehandelte Lösung bzw. Wasser der dem Anodenraum benachbarten Kationenaustauscherzone zugeführt und aus dieser als Produkt abgeleitet wird.

15. Vorrichtung zum Durchführen des Verfahrens nach Anspruch 14, bestehend aus mindestens drei Behältern/Gefäßen mit in diesen vorgesehenen Filterkammern für jeweils in diesen Kammern zu behandelnde Ionenaustauschermassen, wobei diese Kammern mit Zu- und Ableitungen der Flüssigkeiten ausgestattet sind,
**dadurch gekennzeichnet,**
daß
a) eines der Gefäße (Filterbehälter 35,50,51), und zwar das Gefäß (35), mindestens zwei Filterkammern (33,34), gefüllt mit Kationenaustauschermasse (36,37), und zwei Elektrodenkammern (40,41) für Anoden (38) und Kathoden (39) aufweist, und alle Kammern (33,34,40,41) gegenseitig mit kationendurchlässigen Grenzschichten (42,43,44), wie z. B. Ionenaustauschermembranen, abgeschirmt sind, und daß
b) die beiden anderen Gefäße (Filterbehälter 50,51) jeweils mindestens eine Kammer (Filterkammer 48,49) enthalten, die mit Anionenaustauschermasse (46,47) aufgefüllt ist, und daß
c) diese Kammern beider Gefäße an die Kathodenkammer (41) des ersten Gefäßes (35) mittels Rohrleitungen (81) und Absperrorganen (52,59) für die wechselseitige Zuführung von Lauge angeschlossen sind, als auch mittels Leitungen (53,60) und Absperrorganen (72,80) mit den Filterkammern (33) für Kationenaustauscher für die wechselseitige Zuleitung des zu behandelnden und die Ableitung des behandelten Wassers verbunden sind.

## Claims

1. A method for deionising aqueous solutions by means of granular cation and anion exchange media layered in separate filter containers and for regenerating these exchange media, these media being subjected to exhaust-regeneration processes, characterised in that
a) hydrogen ions are produced at the anode in a direct voltage field between two electrodes, i.e. an anode and a cathode, and these hydrogen ions are introduced into the cation exchange medium where they cause the cations (metal ions, such as sodium ions, among others) left behind in this cation exchange medium from the previous deionisation process, to be displaced towards the cathode, and these displaced cations, together with hydroxyl ions formed at the cathode, are collected as a salt solution both in the cathode compartment and in a reservoir compartment surrounding the cathode compartment, and in that
b) the volumetric level of the salt solution collected in the said reservoir compartment and/or the concentration of the said salt solution cause the electrical voltage driving the further ion flow to be reduced, on the one hand, and the current strength or the ion flow between the electrodes to be varied, on the other hand, in particular such that the rate of expulsion of the salt solution from the cathode compartment and the reservoir zone is dependent on the magnitude of the current strength, and in that
c) the salt solution formed cathodically during the electrical regeneration of the cation exchange medium is transferred to the anion exchange medium in order to regenerate this medium, and in that
d) at the end of the regenerative processes in the ion exchange media, the two exchange media are each washed in the opposite direction from the previous direction of displacement of the ions during the regeneration of the said exchange media, and in that
e) the aqueous solution to be deionised, more particularly water to be deionised, firstly passes through the cation exchange medium and then through the anion exchange medium and through both media in the opposite direction from the direction of displacement of the ions during the regeneration of the cation and anion exchange media.

2. A method according to claim 1, characterised in that at least a predetermined current strength is set as the limiting value for the ending and/or the recommencing of the regenerative cycles, i.e. the regenerative processes, for the ion exchange media.

3. A method according to claim 1, characterised in that the expulsion of the salt solution from the cathode compartment and/or the reservoir zone is dependent on the concentration thereof in these compartments.

4. A method according to claims 1 and 2, characterised in that a minimum value of the variation in the concentration of the cathodically produced salt solution is preset as the limiting value for ending the regenerative cycles.

5. Apparatus for implementing the method according to claims 1 to 4, comprising a vessel with at least two filter chambers provided therein for respective ion exchange media to be handled in these chambers, each chamber being provided with supply and discharge lines for the fluids to be passed through the ion exchange media, characterised in that at least one filter chamber (1) is filled with cation exchange medium (3) and at least one other filter chamber (14) is filled with anion exchange medium (15) and in that each filter chamber (1) filled with cation exchange medium (3) is provided with electrodes (4,5) of which one electrode (4) is connected as the anode and the other electrode (5) is connected as the cathode, and the electrode (4) connected as the anode is located in the region of one end (upper end) of the filter chamber (1) and the electrode (5) connected as the cathode is located in the region of the other end (lower end) of this filter chamber (1), and in that an expansion compartment (22) for the cation exchange medium (3) is provided in the region of the electrode (4) connected as the anode, while the electrode (5) connected as the cathode is surrounded by filter means (6) which retains the cation exchange medium (3) but allows fluid therethrough, the said filter means defining a cathode compartment (7) to which there are connected a supply line (pipe 8) for the aqueous solution (untreated water) to be deionised, and a discharge line for the gases produced electrolytically during the regeneration of the ion exchange medium, and in that this cathode compartment (7) is connected via another line which can be shut off to the region of one end of the filter chamber (14) filled with anion exchange medium (15), and in that this filter chamber likewise has an expansion compartment (23) for the anion exchange medium as well as filter means (13) for allowing the salt solution to pass through into the filter chamber (14) and an outlet (pipeline 12) for supplying deionised aqueous solution from this chamber, and in that the ends of the two filter chambers (1,14) are interconnected by a line (30) whereby cationically treated solution is passed into the filter chamber (14) filled with anion exchange medium (15), the solution entering this filter chamber in the region of one end thereof and leaving this filter chamber (14) as the product fluid in the region of the other end thereof.

6. Apparatus according to claim 5, characterised in that the filter chamber (14) filled with anion exchange medium (15) has, at its end serving for the introduction of the aqueous solution to be treated, a compartment (16') separated by filter means (16) from the anion exchange medium (15), the supply line (30) for the solution to be treated and the discharge line (17) for the salt solution opening into and from this compartment respectively.

7. Apparatus according to claim 5, characterised in that a filter chamber (1) for cation exchange medium (3) and a filter chamber (14) for anion exchange medium (15) respectively form a functional unit and this functional unit is combined in a common vessel (filter housing 2).

8. Apparatus according to claim 7, characterised in that the filter chamber (1) for the cation exchange medium (3) and the filter chamber (14) for the anion exchange medium (15) are arranged one above the other in the common vessel (filter housing 2).

9. Apparatus according to claim 5, characterised in that the filter chamber (1) for the cation exchange medium (3) is provided with at least one cooling means.

10. Apparatus according to claim 9, characterised in that the cooling means is designed as a cooling coil and/or cooling rib.

11. Apparatus according to claim 5, characterised in that a filter chamber (1) for cation exchange medium (3) and a filter chamber (14) for anion exchange medium (15) respectively form a functional unit, and this functional unit is arranged in separate vessels (filter housing 2), side by side.

12. Apparatus according to claims 5 and 8, characterised in that an expansion compartment (22,23) for the respective ion-exchange medium is provided in each filter chamber (1,14) above the respective ion exchange medium (3,15) in this chamber.

13. Apparatus according to claims 5 and 12, characterised in that, within each expansion compartment (22,23), there is provided a respective filter compartment (13',29') which is separated from the respective filter chamber (1,14) by a filter plate (29,13), and in that the pipeline (30) for transferring the cationically treated aqueous solution into the filter chamber (14) containing the anion exchange medium (15) opens from the filter compartment (29') of the filter chamber (1) containing the cation exchange medium (3) and in that the pipeline (12) for introducing the salt solution or for removing the treated aqueous solution opens from the filter compartment (13') of the filter chamber (14) containing the anion exchange medium.

14. A method for deionising aqueous solutions by means of granular cation and anion exchange media layered in separate filter containers and for regenerating these exchange media, these media being subjected to exhaust and regeneration processes, characterised in that
a) the hydrogen ions produced in a direct current field between two electrodes at the anode in an anode compartment are introduced into a cation exchange medium, this cation exchange medium being subdivided by means of cation-permeable boundary layers, such as ion exchange membranes, into at least two zones of which one zone has untreated water for treatment and the other pre-treated water flowing therethrough, and in that
b) the hydrogen ions introduced displace the cations (metal ions, such as sodium ions) taken up by the exchange medium from water flowing therethrough, the displaced cations moving towards the cathode and, together with the hydroxyl ions formed at the cathode, being collected as a salt solution in a cathode compartment, and in that
c) the salt solution formed at the cathode is used to regenerate the anion exchange medium, its expulsion being controlled by means of the concentration thereof, and the anion exchange medium is divided between at least two filter units which are subjected to the regenerative treatment alternately and, after completion of the regenerative process, the respective ion exchange medium is washed in the opposite direction from the direction of displacement of the ions during the regeneration, and in that
d) the aqueous solution to be deionised, more particularly the water, is firstly passed through the cation exchange zone adjacent the cathode compartment, then through the respectively regenerated anion filter, likewise in counter-current to the direction of displacement of the ions during the regeneration, and finally is supplied as a pretreated solution or water to the cation exchange zone adjacent the anode compartment and is removed from this cation exchange zone as the product.

15. Apparatus for implementing the method according to claim 14, comprising at least three containers/vessels with filter chambers provided therein for respective ion exchange media to be handled in these chambers, these chambers being provided with supply and discharge lines for the fluids, characterised in that
a) one of the vessels (filter containers 35,50,51), namely the vessel (35), has at least two filter chambers (33,34) filled with cation exchange medium (36,37) and two electrode chambers (40,41) for anodes (38) and cathodes (39), all the chambers (33,34,40,41) being screened from one another by cation-permeable boundary layers (42,43,44), such as ion exchange membranes and in that
b) the other two vessels (filter containers 50,51) each contain at least one chamber (filter chamber 48,49) which is filled with anion exchange medium (46,47), and in that
c) the cathode chamber (41) of the first vessel (35) is connected to both these chambers of these two vessels by means of pipelines (81) and on-off elements (52,59) for supplying salt solution alternately thereto and these chambers of these two vessels are also connected by means of lines (53,60) and on-off elements (72,80) to the cation exchange filter chambers (33) for supplying the water to be treated and removing the treated water alternately.

## Revendications

1. Procédé pour déminéraliser des solutions aqueuses au moyen de masses échangeuses de cations et d'anions granulaires, empilées dans des récipients de filtrage séparés, et pour régénérer ces masses échangeuses, ces masses étant soumises à des processus de chargement-régénération, caractérisé en ce que :
a) des ions d'hydrogène sont produits à l'anode dans un champ de tension continue entre deux électrodes, c'est-à-dire une anode et une cathode, et ces ions d'hydrogène sont introduits dans la masse échangeuse de cations où ils provoquent un refoulement des cations (ions métalliques, tels qu'ions sodium, etc.) restés dans cette masse échangeuse de cations depuis l'opération de déminéralisation précédente, en direction de la cathode, et ces cations délogés s'accumulent sous forme de lessive avec des ions hydroxyles produits à la cathode, aussi bien dans le compartiment cathodique que dans un compartiment de stockage délimitant ce compartiment cathodique, en ce que
b) au moyen de la hauteur volumétrique de la lessive accumulée dans ce compartiment de stockage et/ou au moyen de la concentration de cette lessive, d'une part la tension électrique pour le flux ionique suivant est abaissée, et d'autre part l'intensité du courant voire le flux ionique entre les électrodes est réglé, en particulier de façon à ce que la vitesse de l'évacuation de la lessive hors du compartiment cathodique et de la zone de stockage se fasse en fonction du niveau de l'intensité du courant, en ce que
c) la lessive produite à la cathode lors de la régénération électrique de la masse échangeuse de cations est introduite dans la masse échangeuse d'anions, en vue de régénérer cette masse, en ce que
d) pour terminer les opérations de régénération dans les masses échangeuses d'ions, le décolmatage des deux masses échangeuses se fait respectivement dans la direction contraire au sens précédent du refoulement des ions lors de la régénération de ces dernières, et en ce que
e) la solution aqueuse à déminéraliser, en particulier une eau à déminéraliser, est d'abord amenée à traverser la masse échangeuse de cations, ensuite la masse échangeuse d'anions, et puis les deux masses dans la direction contraire du sens de refoulement des ions lors de la régénération des masses échangeuses de cations et d'anions.

2. Procédé selon la revendication 1, caractérisé en ce qu'au moins une intensité de courant définie au préalable est réglée comme valeur limite pour la fin et/ou le réamorçage des cycles de régénération, c'est-à-dire les opérations de régénération, pour les masses échangeuses d'ions.

3. Procédé selon la revendication 1, caractérisé en ce que l'évacuation de la lessive du compartiment cathodique et/ou de la zone de stockage se fait en fonction de sa concentration dans ces compartiments.

4. Procédé selon les revendications 1 et 2, caractérisé en ce que, comme valeur limite pour la fin des cycles de régénération, on règle une valeur minimum prédéterminée de la variation de concentration observée dans la lessive produite à la cathode.

5. Dispositif pour la mise en oeuvre du procédé selon les revendications 1 - 4, se composant d'un ballon avec au moins deux chambres de filtrage respectivement prévues pour une masse échangeuse d'ions à traiter dans ces chambres, chaque chambre étant pourvue de conduites d'alimentation et d'évacuation pour les liquides à faire traverser les masses échangeuses d'ions, se caractérise par le fait que chaque fois, au moins une chambre de filtrage (1) est remplie de masse échangeuse de cations (3) et au moins une autre chambre de filtrage (14) est remplie de masse échangeuse d'anions (15), et par le fait que chaque chambre de filtrage (1) remplie de masse échangeuse de cations (3) est dotée d'électrodes (4,5) dont l'une (4) est couplée en tant qu'anode, et l'autre (5) en tant que cathode, et que cette électrode (4) couplée en tant qu'anode est disposée dans la zone d'une extrémité (extrémité supérieure) et l'autre électrode (5), couplée en tant que cathode, est disposée dans la zone de l'autre extrémité (extrémité inférieure) de cette chambre de filtrage (1), et par le fait que dans la zone de l'électrode (4) couplée en tant qu'anode, il est prévu un compartiment d'expansion (22) pour la masse échangeuse de cations (3), tandis que l'électrode (5) couplée comme cathode est entourée d'un milieu filtrant (6) qui retient la masse échangeuse de cations (3), mais laisse passer le liquide, et qui forme un compartiment cathodique (7) auquel est raccordée une conduite d'alimentation (colonne montante 8) pour la solution aqueuse (eau brute) à déminéraliser, et une conduite d'évacuation pour les gaz électrolytiques produits lors de la régénération des masses échangeuses d'ions, et que ce compartiment cathodique (7) est en communication, par l'intermédiaire d'une autre conduite obturable, avec la zone de l'extrémité de la chambre de filtrage (14) remplie de masse échangeuse d'anions (15), et que cette chambre de filtrage comporte également un compartiment d'expansion (23) pour la masse échangeuse d'anions tout comme un milieu filtrant (13) pour le passage de la lessive dans la chambre de filtrage (14), et une sortie (conduite 12) pour l'évacuation de la solution aqueuse déminéralisée de cette chambre, et par le fait que les deux chambres de filtrage (1,14) sont raccordées, à leurs extrémités, par une conduite (30) par l'intermédiaire de laquelle la solution traitée par voie cathodique est introduite dans la chambre de filtrage (14) remplie de masse échangeuse d'anions (15), dans la zone d'une de ses extrémités, solution qui quitte cette chambre de filtrage (14) dans la zone de l'autre extrémité, en tant qu'eau finale.

6. Dispositif selon la revendication 5, caractérisé en ce qu'à son extrémité affectée à l'introduction de la solution aqueuse à traiter, la chambre de filtrage (14) remplie de masse échangeuse d'anions (15) présente un compartiment (16') isolé de la masse échangeuse d'anions (15) par le milieu filtrant (6) et dans lequel débouchent la conduite d'alimentation (30) pour la solution, et la conduite d'évacuation (17) pour la saumure.

7. Dispositif selon la revendication 5, caractérisé en ce qu'à chaque fois une chambre de filtrage (1) pour une masse échangeuse de cations (3) et une chambre de filtrage (14) pour une masse échangeuse d'anions (15) constituent une unité fonctionnelle, et que cette unité fonctionnelle est regroupée dans un ballon commun (récipient de filtrage 2).

8. Dispositif selon la revendication 7, caractérisé en ce que la chambre de filtrage (1) pour la masse échangeuse de cations (3) et la chambre de filtrage (14) pour la masse échangeuse d'anions (15) sont superposées dans le ballon commun (récipient de filtrage 2).

9. Dispositif selon la revendication 5, caractérisé en ce que la chambre de filtrage (1) pour la masse échangeuse de cations (3) est pourvue d'au moins un moyen de refroidissement.

10. Dispositif selon la revendication 9, caractérisé en ce que le moyen de refroidissement est conçu sous forme de serpentin de refroidissement et/ou d'ailette de refroidissement.

11. Dispositif selon la revendication 5, caractérisé en ce qu'à chaque fois, une chambre de filtrage (1) pour une masse échangeuse de cations (3) et une chambre de filtrage (14) pour une masse échangeuse d'anions (15) constituent une unité fonctionnelle, et en ce que cette unité fonctionnelle est placée dans des ballons séparés (récipient de filtrage 2), mais agencés l'un à côté de l'autre.

12. Dispositif selon les revendications 5 et 8, caractérisé en ce que dans chaque chambre de filtrage (1,14), il est prévu, au-dessus de chaque masse échangeuse d'ions (3,15) versée dans cette chambre, un compartiment (22,23) pour l'expansion de la masse en question.

13. Dispositif selon les revendications 5 et 12, caractérisé en ce qu'à l'intérieur de chaque compartiment d'expansion (22,23) il est prévu un compartiment de filtrage (13',29') séparé de la chambre de filtrage respective (1,14) par une plaque filtrante (29,13), en ce que la conduite (30) servant au transfert de la solution aqueuse traitée par les cations, dans la chambre de filtrage (14) de la masse échangeuse d'anions (15) débouche dans le compartiment de filtrage (29') de la chambre de filtrage (1) renfermant la masse échangeuse de cations (3), et en ce que la conduite (12) servant à apporter la lessive ou encore à évacuer la solution aqueuse traitée, débouche dans le compartiment de filtrage (13') de la chambre de filtrage (14) renfermant la masse échangeuse d'anions.

14. Procédé pour déminéraliser des solutions aqueuses au moyen de masses échangeuses de cations et d'anions granulaires, empilées dans des récipients de filtrage séparés, et pour régénérer ces masses échangeuses, ces masses étant soumises à des processus de chargement-régénération, caractérisé en ce que :
a) les ions d'hydrogène produits à une anode dans un champ de tension continue établi entre deux électrodes dans un compartiment anodique sont introduits dans une masse échangeuse de cations, et que cette masse échangeuse de cations est compartimentée au moyen de couches séparatrices perméables aux cations, comme p.ex. des membranes échangeuses d'ions, en au moins deux zones, dont l'une est traversée par la solution aqueuse devant être déminéralisée, en particulier une eau brute, et l'autre, par de l'eau prétraitée, en ce que :
b) les ions d'hydrogène introduits refoulent vers la cathode les cations (ions métalliques comme p.ex. ions sodium) que la masse échangeuse a captés dans les eaux en écoulement, et en ce que ces cations délogés sont accumulés sous forme de lessive dans un compartiment cathodique avec les ions hydroxyles formés à la cathode, en ce que :
c) l'évacuation de la lessive est régulée à l'aide de sa concentration, la lessive produite à la cathode étant utilisée pour régénérer la masse échangeuse d'anions, et cette masse échangeuse d'anions est partagée en au moins deux unités de filtrage, qui sont soumises en alternance au traitement de régénération, le décolmatage respectif de la masse échangeuse d'ions se faisant, à la fin des processus de régénération, en sens contraire de celui du refoulement des ions lors de la régénération, et en ce que :
d) la solution aqueuse à déminéraliser, l'eau tout particulièrement, est d'abord acheminée au-travers de la zone d'échange de cations voisine du compartiment cathodique, et peut traverser le filtre anionique régénéré, également à contre-courant du sens du délogement des ions pendant la régénération, et peut finalement être acheminée comme solution prétraitée ou comme eau vers la zone d'échange de cations voisine du compartiment anodique, et être évacuée de ce dernier comme produit.

15. Dispositif pour la mise en oeuvre du procédé selon la revendication 14, se composant d'au moins trois récipients/ballons comportant des chambres de filtrage prévues pour chacune des masses échangeuses d'ions à traiter dans ces chambres, ces chambres étant munies de conduites d'alimentation et d'évacuation des liquides, caractérisé en ce que :
a) l'un des ballons (récipients de filtrage 35,50,51), à savoir le ballon (35) présente au moins deux chambres de filtrage (33,34) remplies de masse échangeuse de cations (36,37), et deux chambres d'électrodes (40,41) pour des anodes (38) et des cathodes (39), et que toutes les chambres (33,34,40,41) sont isolées entre elles par des couches séparatrices (42,43,44) perméables aux cations, comme p.ex. des membranes échangeuses d'ions, en ce que :
b) les deux autres ballons (récipients de filtrage 50,51) comportent chacun au moins une chambre (chambre de filtrage 48,49) remplie de masse échangeuse d'anions (46,47), et en ce que :
c) ces chambres des deux ballons communiquent avec la chambre cathodique (41) du premier ballon (35) au moyen de conduites (81) et d'organes d'arrêt (52,59) servant à apporter, en alternance, de la lessive, et avec les chambres de filtrage (33) pour échangeurs de cations, au moyen de conduites (53,60) et d'organes d'arrêt (72,80), servant, en alternance, à apporter l'eau devant être traitée, et à évacuer l'eau traitée.
